# EUROPEAN PATENT APPLICATION

(11) **EP 1 312 642 A1**
(43) Date of publication of application: **21.05.2003**
(21) Application number: 02024141.0
(22) Date of filing: 30.10.2002
(51) Int. Cl.: C08L 29/10

(54) **Softening agent**

(30) Priority: 05.11.2001 JP 2001339023
(71) Applicant: Kyowa Yuka Co., Ltd., Tokyo 100-0004 (JP)
(72) Inventor: Inayama,Toshihiro, c/oYokkaichi Research Labor., Yokkaichi-shi, Mie 510-0022 Japan (JP); Murata, Shigeru, c/oYokkaichi Research Labor., Yokkaichi-shi, Mie 510-0022 Japan (JP); Niimi, Tatsuo, c/oYokkaichi Research Laboratories, Yokkaichi-shi, Mie 510-0022 Japan (JP)
(74) Representative: Casalonga, Axel

(57) **Abstract**

An object of the present invention is to provide a softening agent for a thermoplastic resin that gives flexibility, impact-resistance, etc. to a thermoplastic resin.

The present invention provides the following (1) to (3) etc.
(1) A softening agent for a thermoplastic resin comprising polyvinyl ether.
(2) The softening agent according to the above (1), wherein the polyvinyl ether is polyvinyl ether having a structural unit represented by the general formula (I): 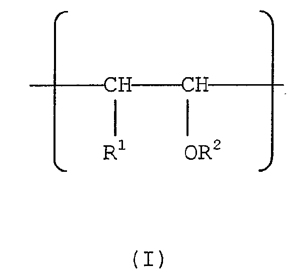 (wherein R¹ is a hydrogen atom or lower alkyl, and R² is substituted or unsubstituted lower alkyl, substituted or unsubstituted cycloalkyl, substituted or unsubstituted aryl, or substituted or unsubstituted aralkyl).
(3) The softening agent according to the above (1) or (2), wherein the weight-average molecular weight of the polyvinyl ether is 1,000 to 3,000,000.

## Description

### Background of the Invention

The present invention relates to a softening agent for a thermoplastic resin, which gives flexibility, impact-resistance, etc. to a thermoplastic resin.

The methods that have so far been known to soften thermoplastic resins comprise blending a plasticizer or a soft resin with a thermoplastic resin.

For example, Japanese Published Unexamined Patent Application No. 306264/94 discloses the addition of a cyclic oligomer of lactic acid as a plasticizer to polylactic acid or a copolymer of lactic acid with other hydroxycarboxylic acid(s) in order to soften polylactic acid that is poor in flexibility and impact-resistance.

In U.S. Patent No. 3,636,956 is disclosed the addition of glycerin triacetate as a plasticizer to an L-lactide/D,L-lactide copolymer to soften the copolymer.

However, compositions obtained according to either of the above methods have a problem that they are prone to bleeding, fogging, etc., and poor in heat resistance and impact-resistance.

An object of the present invention is to provide a softening agent for a thermoplastic resin that gives flexibility, impact-resistance, etc. to a thermoplastic resin.

### Summary of the Invention

The present invention provides the following (1) to (11).
(1) A softening agent for a thermoplastic resin comprising polyvinyl ether.
(2) The softening agent according to the above 1, wherein the polyvinyl ether is polyvinyl ether having a structural unit represented by the general formula (I): 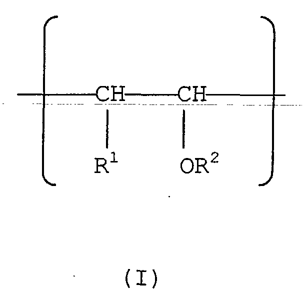 (wherein R¹ is a hydrogen atom or lower alkyl, and R² is substituted or unsubstituted lower alkyl, substituted or unsubstituted cycloalkyl, substituted or unsubstituted aryl, or substituted or unsubstituted aralkyl).
(3) The softening agent according to the above (1) or (2), wherein the weight-average molecular weight of the polyvinyl ether is 1,000 to 3,000,000.
(4) The softening agent according to any of the above (1) to (3), wherein the tensile modulus of a thermoplastic resin based on JIS K 7113 is 150 MPa or more at 23°C.
(5) The softening agent according to any of the above (1) to (4), wherein the weight-average molecular weight of the thermoplastic resin is 3,000 to 3,000,000.
(6) The softening agent according to any of the above (1) to (5), wherein the molecular weight distribution, that is Mw (weight-average molecular weight)/Mn (number-average molecular weight), is 1.5 or less.
(7) A method for softening a thermoplastic resin, which comprises mixing the thermoplastic resin with polyvinyl ether.
(8) A composition comprising polyvinyl ether and a polyester resin.
(9) The composition according to the above (8), wherein the polyester resin is a polyhydroxycarboxylic acid.
(10) A composition comprising polyvinyl ether and a polystyrene resin.
(11) A composition comprising polyvinyl ether and a polycarbonate resin.

### Detailed Description of the Invention

In the definition of the groups in the general formula (I), examples of the lower alkyl include C1 to C8 straight chain or branched chain alkyls, more specifically, methyl, ethyl, propyl, isopropyl, butyl, sec-butyl, tert-butyl, isobutyl, pentyl, isopentyl, neopentyl, hexyl, heptyl, and octyl.

Examples of the cycloalkyl include C3 to C10 cycloalkyls, more specifically, cyclopropyl, cyclobutyl, cyclopentyl, cyclohexyl, cycloheptyl, cyclooctyl, cyclononyl, and cyclodecyl.

Examples of the aryl include C6 to C14 aryls, more specifically, phenyl, naphthyl, and anthryl.

Examples of the aralkyl include C7 to C15 aralkyls, more specifically, benzyl, phenethyl, naphthylmethyl, naphthylethyl, benzhydryl, and trityl.

Examples of the substituent in the substituted lower alkyl and the substituted cycloalkyl include lower alkoxy, and a halogen atom.

Examples of the substituent in the substituted aryl and the substituted aralkyl include lower alkyl, lower alkoxy and a halogen atom.

In the definition of the substituents, lower alkyls exemplified above are mentioned as the lower alkyl, and the lower alkyl portion of the lower alkoxy, and fluorine, chlorine, bromine, and iodine atoms are mentioned as the halogen atom.
(1) Polyvinyl ether
   The polyvinyl ether is not particularly limited, but polyvinyl ethers having a structural unit represented by the general formula (I): 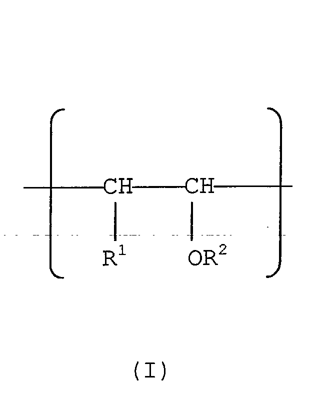 (wherein the definitions of R¹ and R² are the same as above, respectively) are preferable. Among them, those in which R² is substituted or unsubstituted lower alkyl are more preferably used.
   Polyvinyl ethers can be prepared by cationic polymerization etc. of the corresponding monomers according to known methods [Kobunshi No Gosei/Hannou (Syntheses and Reactions of Polymers) (1), Edited by The Society of Polymer Science, Japan, p.242-276, Kyoritsu Shuppan, 1995; Kobunshi Gosei No Jikken Ho (Experimental Methods of Polymer Synstheses), p.195-207, Kagakudojin, 1972, etc.]
   The polyvinyl ether may be either a homopolymer or a copolymer.
   The weight-average molecular weight of the polyvinyl ether is not particularly limited, but is preferably 1,000 to 3,000,000, and more preferably 3,000 to 1,000,000.
   Furthermore, the molecular weight distribution [Mw (weight-average molecular weight)/Mn (number-average molecular weight)] of the polyvinyl ether is also not particularly limited, but is preferably 1.5 or less, and more preferably 1.0 to 1.5.
(2) Thermoplastic resins for which the softening agent of the present invention is used
   There is no particular limitation as to the thermoplastic resins, but those having a tensile modulus of 150 MPa or more at 23°C based on JIS K 7113 are preferable, and those having a tensile modulus of 150 to 600 MPa at 23°C are more preferable.
   Examples of the thermoplastic resin include polyolefin resins such as high density polyethylene, polypropylene, etc., polystyrene resins such as polystyrene, AS (acrylonitrile-styrene) resin, ABS (acrylonitrile-butadiene-styrene) resin, etc., polyacrylic resins such as polymethyl acrylate etc., polyester resins such as polyethylene terephthalate, polybutylene terephthalate, polyhydroxycarboxylic acids, etc., polycarbonate resins, polyamide resins, and polyacetal resins. Among these, polyolefin resins, polystyrene resins, polyester resins and polycarbonate resins are preferable, and among polyester resins, polyhydroxycarboxylic acids are preferable.
   As the polyhydroxycarboxylic acid, for example, polylactic acid or copolymers of lactic acid and other hydroxycarboxylic acid(s) are preferable.
   The copolymers of lactic acid and other hydroxycarboxylic acid(s) preferably contain 50 wt% or more and more preferably 90 wt% or more lactic acid in the total raw material monomers.
   The weight-average molecular weight of the thermoplastic resin is not particularly limited, but is preferably 3,000 to 3,000,000, and more preferably 5,000 to 1,000,000.
   While the thermoplastic resins may be prepared according to known methods [Yuki Kagaku Handbook (Handbook of Organic Chemistry), Edited by The Society of Synthetic Organic Chemistry, p.494-538, Gihodo Shuppan Co., Ltd.., published: July 10, 1968 etc.], it is also possible to purchase commercially available products. One example of the methods for preparing polyhydroxycarboxylic acids is specifically explained in detail as follows:
   Examples of the hydroxycarboxylic acid which is the raw material of polyhydroxycarboxylic acids include lactic acid, glycolic acid, 3-hydroxybutyric acid, 4-hydroxybutyric acid, 4-hydroxyvaleric acid, 5-hydroxyvaleric acid, and 6-hydroxycaproic acid.
   Hydroxycarboxylic acids which are the raw materials of polyhydroxycarboxylic acids may be any of L, D and DL isomers.
   Polyhydroxycarboxylic acids can be prepared by subjecting a hydroxycarboxylic acid or the corresponding lactide to dehydration condensation or ring-opening polymerization in a manner similar to known methods (Japanese Published Unexamined Patent Applications Nos. 65369/94 and 168167/98, WO97/08220, WO97/12926, etc.)
   The melting point of the polyhydroxycarboxylic acids thus obtained is preferably 130°C or higher, and more preferably 130-250°C.
(3) Softening agent of the present invention
   The softening agent of the present invention preferably contains polyvinyl ether in an amount of 50 wt% or more, and more preferably 70 wt% or more relative to the total weight. If necessary, the softening agent of the present invention may contain pigments, agents giving electroconductivity, antistatic agents, dyestuffs, antioxidants, photo-deterioration preventives, lubricants, fungicides, etc. The amount of these additives to be used is not particularly limited, but is preferably 0.01-5.0 wt% relative to polyvinyl ether.
   The softening agent of the present invention is used so that the polyvinyl ether content is preferably 1-50 wt%, and more preferably 5-30 wt% relative to the thermoplastic resin.
   The method of using the softening agent of the present invention is not particularly limited. It can be mixed with a thermoplastic resin in a manner similar to known methods [Jissen (Practical) Polymer Alloy, p.21, Agune Shofusha, published: October 20, 1993, etc.] More specifically, it is preferable that the softening agent of the present invention is added to a thermoplastic resin, which are then mixed by kneading with heating (preferably at 150-250°C) using an open roll, an internal kneader, an extrusion kneader, etc. According to the present invention, it is possible to add the softening agent to a thermoplastic resin followed by mixing, and it is also possible to add a thermoplastic resin to the softening agent followed by mixing. The order of the addition of the softening agent and a thermoplastic resin is not restricted.
   The composition containing the softening agent of the present invention and a thermoplastic resin can be applied to various uses such as sheets, films, plates, tubular moldings, packaging plastics, hoses, wire coverings, food trays, food containers, injection moldings, etc. by carrying out thermal molding processing, or by applying or laminating it after dissolving it in a solvent in a manner similar to known methods [Plastic Seikei Kako Nyumon (Introduction to Plastic Molding Processing), p.59-78, Nikkan Kogyo Shimbun, Ltd., published: March 1, 1982, etc.]
   The composition containing the softening agent of the present invention and a thermoplastic resin is excellent in flexibility, impact-resistance, heat resistance, transparency, etc., and is almost free from the development of bleeding or fogging.
(4) Method for softening according to the present invention
   The method for softening according to the present invention can be carried out in accordance with the method of using the softening agent of the present invention explained above. According to the method for softening of the present invention, it is possible to add the polyvinyl ether to a thermoplastic resin followed by mixing, and it is also possible to add a thermoplastic resin to the polyvinyl ether followed by mixing. The order of the addition of the polyvinyl ether and a thermoplastic resin is not restricted.
(5) Composition of the present invention comprising polyvinyl ether and a polystyrene resin, a polyester resin or a polycarbonate resin
   If necessary, various additives such as pigments, agents giving electro-conductivity, antistatic agents, dyestuffs, antioxidants, photo-deterioration preventives, lubricants, fungicides, etc. can be added to the composition of the present invention comprising polyvinyl ether and a polystyrene resin, a polyester resin or a polycarbonate resin. The amount of these additives to be added is not particularly limited, but is preferably 0.01-5.0 wt% relative to the total weight of the composition.
   The composition of the present invention comprising polyvinyl ether and a polystyrene resin, a polyester resin or a polycarbonate resin can be applied to various uses such as sheets, films, plates, tubular moldings, packaging plastics, hoses, wire coverings, food trays, food containers, injection moldings, etc. by carrying out thermal molding processing, or by applying or laminating it after dissolving it in a solvent in a manner similar to known methods [Plastic Seikei Kako Nyumon (Introduction to Plastic Molding Processing), p.59-78, Nikkan Kogyo Shimbun, Ltd., published: March 1, 1982, etc.]
   The composition of the present invention comprising polyvinyl ether and a polystyrene resin, a polyester resin or a polycarbonate resin is excellent in flexibility, impact-resistance, heat resistance, transparency, etc., and is almost free from the development of bleeding or fogging.

### Example

The weight-average molecular weight of the polylactic acid obtained in Reference Example 1 was measured by gel permeation chromatography according to the following method:
Detection method: RI (differential refractive index) and UV (ultraviolet absorption)
Column: TOSOH G-5000, TOSOH G-3000, and TOSOH G-1000 (products of Tosoh Corporation) were connected in series.
Column oven: 40°C
Eluent: Chloroform
Internal standard substance: Polystyrene

The weight-average molecular weight, number-average molecular weight, and molecular weight distribution of the polyvinyl ethers obtained in Reference Examples 2 and 3 were measured by gel permeation chromatography according to the following method:
Detection method: RI and UV
Column: TSK gel Super HM-M (2 columns) and TSK gel Super HM-H (products of Tosoh Corporation) were connected in series.
Column oven: 40°C
Eluent: Tetrahydrofuran
Internal standard substance: Polystyrene

### Reference Example 1: Synthesis of polylactic acid

An aqueous L-lactic acid solution having a concentration of 90 wt% (product of Wako Pure Chemical Industries, Ltd.)(1010.0 g) was added to a reactor provided with a stirrer, a Liebig condenser, and a nitrogen lead-in tube. After nitrogen substitution was effected, the temperature was raised to 150°C while gradually reducing the pressure. The pressure was further reduced finally to 133 Pa. A mixture containing lactic acid and lactic acid oligomer as main components (525.2 g) (yield: 52%) that distilled out in an ice-cooled vessel was obtained.

The thus obtained mixture containing lactic acid and lactic acid oligomer as main components was dissolved in acetone and the acid value was measured. As a result, the degree of polymerization of lactic acid in the mixture was about 1.20. The above-mentioned mixture containing lactic acid and lactic acid oligomer as main components (500.0 g) was stirred at 140°C for 5 hours under nitrogenous airflow to obtain 417.0 g of lactic acid oligomer. As a result of measuring the acid value for measuring the degree of polymerization in a manner similar to that described above, the degree of polymerization was 3.41.

To 400 g of this oligomer was added 8 g of synthetic aluminum silicate (Tomita Pharmaceutical Co., Ltd..), the temperature was raised to 200°C and the pressure was gradually reduced to 2220 Pa over 30 minutes. After stirring the mixture at 200±5°C for one hour, the pressure was gradually reduced to 133 Pa and the mixture was further stirred at 200±5°C for 9 hours. The mixture was cooled to room temperature to obtain 200 g of solidified, milky-white polylactic acid. The weight-average molecular weight of the thus obtained polylactic acid was 83,000.

### Reference Example 2: Synthesis of polyisobutyl vinyl ether

A dichloromethane solution (6 L) containing 5 mol of isobutyl vinyl ether (500.8 g) and 5 mmol of isobutoxyethyl chloride was prepared in a reactor provided with a three-way stopcock. To this monomer solution was added 500 ml of a dichloromethane solution containing 25 mmol of tin tetrachloride and 40 mmol of tetra-n-butyl ammonium chloride at -15°C and the mixture was sufficiently stirred. After stirring for 50 minutes, 2 L of methanol was added to the polymerization solution to stop the polymerization. The solution was diluted with hexane and washed with an aqueous hydrochloric acid solution, an aqueous sodium hydroxide solution, and water in this order, and the solvent was distilled off to obtain about 490 g of polyisobutyl vinyl ether. The rate of polymerization of isobutyl vinyl ether at that time was 98% and the obtained polyisobutyl vinyl ether had a weight-average molecular weight (Mw) of 140,000, a number-average molecular weight (Mn) of 100,000, and a molecular weight distribution, Mw/Mn, of 1.40.

### Reference Example 3: Synthesis of polyethyl vinyl ether

A procedure similar to that in Reference Example 2 was carried out except that 6.93 mol (500 g) of ethyl vinyl ether was used in place of isobutyl vinyl ether. As a result, about 480 g of polyethyl vinyl ether was obtained.

### Example 1

The polylactic acid obtained in Reference Example 1 (51.0 g) and 9.0 g of the polyisobutyl vinyl ether obtained in Reference Example 2 were kneaded using a laboplast mill (product of Toyo Seiki Co., Ltd.) at 190°C and compounded. A sheet of 2 mm thickness was obtained from the compounded product using a hot press at 190°C. The obtained sheet was clear and colorless.

### Example 2

A sheet of 2 mm thickness was obtained by using 51.0 g of the polylactic acid obtained in Reference Example 1 and 9.0 g of the polyethyl vinyl ether obtained in Reference Example 3 in a procedure similar to that in Example 1. The obtained sheet was clear and colorless.

### Example 3

A commercially available polypropyrene resin (MA03, product of JAPAN POLYCHEM Co., Ltd.)(51.0 g) and 9.0 g of the polyisobutyl vinyl ether obtained in Reference Example 2 were kneaded at 220°C using a laboplast mill (product of Toyo Seiki Co., Ltd.) and compounded. A sheet of 2 mm thickness was obtained from the compounded product using a hot press at 230°C.

### Example 4

A sheet of 2 mm thickness was obtained by using 51.0 g of a commercially available polystyrene resin (HH105, product of A&M Styrene Co., Ltd.) and 9.0 g of the polyisobutyl vinyl ether obtained in Reference Example 2 in a procedure similar to that in Example 3 except that a kneading temperature of 200°C was used.

### Example 5

A sheet of 2 mm thickness was obtained by using 51.0 g of a commercially available polycarbonate resin (S2000, product of Mitsubishi Engineering-plastics Co., Ltd.) and 9.0 g of the polyisobutyl vinyl ether obtained in Reference Example 2 in a procedure similar to that in Example 3 except that a kneading temperature and hot pressing temperature of 280°C, respectively, were used.

### Example 6

A sheet of 2 mm thickness was obtained by using 51.0 g of a commercially available polypropyrene resin (MA03, product of JAPAN POLYCHEM Co., Ltd.) and 9.0 g of the polyethyl vinyl ether obtained in Reference Example 3 in a procedure similar to that in Example 3.

### Example 7

A sheet of 2 mm thickness was obtained by using 51.0 g of a commercially available polystyrene resin (HH105, product of A&M Styrene Co., Ltd.) and 9.0 g of the polyethyl vinyl ether obtained in Reference Example 3 in a procedure similar to that in Example 4.

### Comparative Example 1

A sheet of 2 mm thickness was obtained by using 60.0 g of the polylactic acid obtained in Reference Example 1 through hot pressing similar to that in Example 1. The obtained sheet was clear and colorless.

### Comparative Example 2

A sheet of 2 mm thickness was obtained by using 60 g of a commercially available polypropyrene resin (MA03, product of JAPAN POLYCHEM Co., Ltd.) through hot pressing at 230°C.

### Comparative Example 3

A sheet of 2 mm thickness was obtained by using 60 g of a commercially available polystyrene resin (HH105, product of A&M Styrene Co., Ltd.) through hot pressing at 230°C.

### Comparative Example 4

A sheet of 2 mm thickness was obtained by using 60 g of a commercially available polycarbonate resin (S2000, product of Mitsubishi Engineering-plastics Co., Ltd.) through hot pressing at 280°C.

### Comparative Example 5

A sheet of 2 mm thickness was obtained by using 51.0 g of a commercially available polypropyrene resin (MA03, product of JAPAN POLYCHEM Co., Ltd.) and 9.0 g of HYBRAR 7125 (styrene-isoprene thermoplastic elastomer, product of Kuraray Co., Ltd.) in a procedure similar to that in Example 1.

### Comparative Example 6

A sheet of 2 mm thickness was obtained by using 51.0 g of a commercially available polystyrene resin (HH105, product of A&M Styrene Co., Ltd.) and 9.0 g of HYBRAR 7125 (styrene-isoprene thermoplastic elastomer, product of Kuraray Co., Ltd.) in a procedure similar to that in Example 1.

### Comparative Example 7

A sheet of 2 mm thickness was obtained by using 51.0 g of a commercially available polycarbonate resin (S2000, product of Mitsubishi Engineering-plastics Co., Ltd.) and 9.0 g of HYBRAR 7125 (styrene-isoprene thermoplastic elastomer, product of Kuraray Co., Ltd.) in a procedure similar to that in Example 5.

### Test Example 1

Tensile tests were carried out in accordance with JIS K 7113 using the sheets obtained in Examples 1 and 2, and Comparative Example 1. In carrying out the tensile tests, Autograph AG5KN (product of Shimadzu Corporation) and No. 2 test piece as a test piece type were used and the rate of pulling was 50 mm per minute. The results are shown in Table 1.

**Table 1**

| | Example 1 | Example 2 | Comparative Example 1 |
|---|---|---|---|
| Tensile yield strength (MPa) | 47 | 48 | 69 |
| Tensile elongation (%) | 21 | 21 | 3.5 |

As compared with the sheet obtained in Comparative Example 1, those obtained in Examples 1 and 2 are excellent in the tensile yield strength and tensile elongation, and, therefore, in flexibility and impact-resistance.

### Test Example 2

The sheets obtained in Examples 1 and 2 were left to stand in a circulating hot air electric oven at 50°C for one month and the development of bleeding matter and reduction in the weight with respect to each sheet after one month were examined. As a result, neither development of bleeding matter nor reduction in the weight was observed in either of the sheets obtained in Examples 1 and 2. This indicates that both of the sheets obtained in Examples 1 and 2 have an excellent property of being free from bleeding and fogging over the long-term use.

### Test Example 3

The following evaluations were carried out with respect to the sheets obtained in Examples 3 to 7, and Comparative Examples 2 to 7.
Measurement of Rockwell hardness: The Rockwell hardness of the sheets was measured in accordance with JIS K 7202.
ABK-8 (product of AKASHI) was used as a hardness tester and measurement was carried out by R scale.
Tensile test: The test was carried out in a manner similar to that in Test Example 1. Tensile yield strength and tensile break strength were measured only with the sheets obtained in Examples 3 to 7.

The results are shown in Tables 2 and 3. In the tables, each of the notations indicates the following meaning.
PP: Commercially available polypropyrene resin (MA 03, product of JAPAN POLYCHEM Co., Ltd.)
PS: Commercially available polystyrene resin (HH105, product of A&M Styrene Co., Ltd.)
PC: Commercially available polycarbonate resin (S2000, product of Mitsubishi Engineering-plastics Co., Ltd.)
PIBVE: Polyisobutyl vinyl ether obtained in Reference Example 2
PEVE: Polyethyl vinyl ether obtained in Reference Example 3
HYBRAR: HYBRAR 7125 (Product of Kuraray Co., Ltd..: styrene-isoprene thermoplastic elastomer)

The weight ratio of compounding indicates the weight ratio of the thermoplastic resin to the softening agent.

**Table 2**

| | Example 3 | Example 4 | Example 5 | Example 6 | Example 7 |
|---|---|---|---|---|---|
| Thermoplastic Resin | PP | PS | PC | PP | PS |
| Softening agent | PIBVE | PIBVE | PIBVE | PEVE | PEVE |
| Weight ratio of compounding | 85/15 | 85/15 | 85/15 | 85/15 | 85/15 |
| Rockwell hardness (HRR) | 75 | 96 | 80 | 70 | 91 |
| Tensile yield strength (MPa) | 24 | - | 38 | 25 | - |
| Tensile break strength (MPa) | 14 | 30 | 37 | 14 | 30 |
| Tensile elongation (%) | 112 | 2 | 44 | 161 | 2 |

**Table 3**

| | Comparative Examples | | | | | |
|---|---|---|---|---|---|---|
| | 2 | 3 | 4 | 5 | 6 | 7 |
| Thermoplastic resin | PP | PS | PC | PP | PS | PC |
| Softening agent | - | - | - | HYBRAR | HYBRAR | HYBRAR |
| Weight ratio of compounding | 100/0 | 100/0 | 100/0 | 85/15 | 85/15 | 85/15 |
| Rockwell hardness (HRR) | 93 | 118 | 115 | 78 | 98 | 85 |
| Tensile elongation (%) | 3 | 1 | 15 | 3 | 1 | 15 |

As compared with the sheets obtained in Comparative Example 2 to 7, the sheets obtained in Examples 3 to 7 are excellent in the Rockwell hardness and tensile elongation, and, therefore, in flexibility and impact-resistance.

### Test Example 4

The sheets obtained in Examples 3 to 7 were left to stand in a circulating hot air electric oven at 50°C for one month and the development of bleeding matter and reduction in the weight with respect to each sheet after one month were examined. As a result, neither development of bleeding matter nor reduction in the weight was observed in any of the sheets obtained in Examples 3 to 7. This indicates that all the sheets obtained in Examples 3 to 7 have an excellent property of being free from bleeding and fogging over the long-term use.

## Claims

1. A softening agent for a thermoplastic resin comprising polyvinyl ether.

2. The softening agent according to claim 1, wherein the polyvinyl ether is polyvinyl ether having a structural unit represented by the general formula (I): 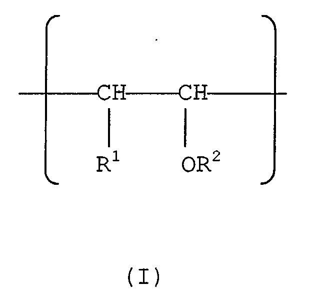 (wherein R¹ is a hydrogen atom or lower alkyl, and R² is substituted or unsubstituted lower alkyl, substituted or unsubstituted cycloalkyl, substituted or unsubstituted aryl, or substituted or unsubstituted aralkyl).

3. The softening agent according to claim 1 or 2, wherein the weight-average molecular weight of the polyvinyl ether is 1,000 to 3,000,000.

4. The softening agent according to any of claims 1 to 3, wherein the tensile modulus of a thermoplastic resin based on JIS K 7113 is 150 MPa or more at 23°C.

5. The softening agent according to any of claims 1 to 4, wherein the weight-average molecular weight of the thermoplastic resin is 3,000 to 3,000,000.

6. The softening agent according to any of claims 1 to 5, wherein the molecular weight distribution, that is Mw (weight-average molecular weight)/Mn (number-average molecular weight), is 1.5 or less.

7. A method for softening a thermoplastic resin, which comprises mixing the thermoplastic resin with polyvinyl ether.

8. A composition comprising polyvinyl ether and a polyester resin.

9. The composition according to claim 8, wherein the polyester resin is a polyhydroxycarboxylic acid.

10. A composition comprising polyvinyl ether and a polystyrene resin.

11. A composition comprising polyvinyl ether and a polycarbonate resin.
